# EUROPEAN PATENT APPLICATION

(11) **EP 2 123 148 A1**
(43) Date of publication of application: **25.11.2009**
(21) Application number: 09425200.4
(22) Date of filing: 22.05.2009
(51) Int. Cl.: A01G 13/02

(54) **Self-supporting body for the conservation and cultivation of plant species**

(30) Priority: 22.05.2008 IT VI20080118
(71) Applicant: Cucchetto, Bruno, 37029 S. Pietro in Cariano (VR) (IT)
(72) Inventor: Cucchetto, Bruno, 37029 S. Pietro in Cariano (VR) (IT)
(74) Representative: Santi, Filippo

(57) **Abstract**

A self-supporting body for the conservation and the cultivation of plant species, used in particular for the protection of pot or ground plants, comprising a plate or sheet (10) of transparent plastic material, which is cylindrically wrapped around the plant and fixed at a vertical side (11) of the body, through quick opening fastening means. At the top a closing element is positioned (12), made of transparent and/or colored material, having also functions of diametral fixing of the sheet (10), while at the bottom a further closing element (14) may be present, having a profile in the shape of a tank for collecting water and which can be used as lower support of a pot, in case the protection structure is used for pot plants.

## Description

The present invention relates generally to a self-supporting body for the conservation and the cultivation of plant species.

More particularly, the invention relates to a structure for the winter protection of plants from low temperatures, suitable to be assembled and disassembled quickly and easily, having low production cost and pleasant aesthetic effect.

Greenhouses for the cultivation and the protection of green plants have been known for long time.

These greenhouses of the traditional type typically consist of a fixed and removable supporting frame, which is subsequently covered with one or more sheets made of transparent plastic, with low thickness; consequently, these plastic lightweight sheets present low thermal insulation and assure a low thermal protection.

Moreover, the greenhouses currently on the market have a shape referable to a square or rectangular plan, although the pots and the green plants have a circular dimensions; however, the square or rectangular plan obliges to arrange an entry door and a bad use of the inner space.

It further follows that the current protection structures are not self-supporting, requiring the disassembly of the whole reinforcement frame, and they need, therefore, large assembling and disassembling time, with consequent high installation costs.

Finally, these structures of known type present relatively high production costs, in terms of the supporting frame and the protection covering, have little pleasant aesthetic and are not adjustable in optimal way with the growth of green plants.

Purpose of the present invention is therefore to overcome the drawbacks mentioned above and, in particular, to provide a self-supporting body for the conservation and the cultivation of plant species, which allows to obtain an effective protection of the plants from the outside temperatures and which, at the same time, is simple and quick to disassemble and reassemble.

Another purpose of the present invention is to carry out a self-supporting body for the conservation and the cultivation of plant species, which easily allows to aerate the vegetable species positioned inside.

Other purpose of the invention is to provide a self-supporting body for the conservation and the cultivation of plant species which is aesthetically pleasant and which takes up a minimum space when not in use.

Further purpose of the present invention is to indicate a self-supporting body for the conservation and the cultivation of vegetable species which can be used both for pot plants and for ground plants.

A last but not least purpose of the invention is to achieve a self-supporting body for the conservation and the cultivation of vegetable species, which allows to limit production costs, compared to the

### prior art.

These and other purposes are achieved through a self-supporting body for the conservation and the cultivation of plant species, according to the attached claim 1.

Other features of detail of the self-supporting body, according to the invention, are set forth in the correspondent dependent claims.

Further purposes and advantages will be more apparent from the description which follows, relating to a preferred embodiment of the invention, provided by illustrative but not limiting way, with reference to the attached drawing tables, where:
- figure 1 is an exploded view of an illustrative and preferred, but not limited to, embodiment of the self-supporting body for the conservation and the cultivation of plant species, according to the present invention;

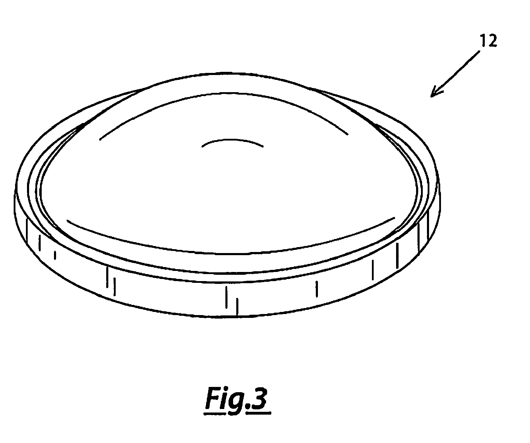

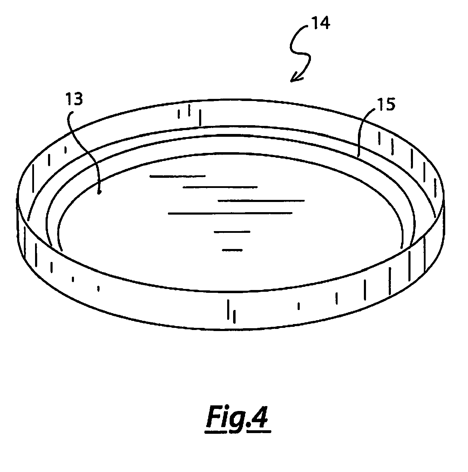

- figures 2, 3 and 4 show a series of enlarged views of the various elements of the self-supporting body for the conservation and the cultivation of plant species, according to the present invention.

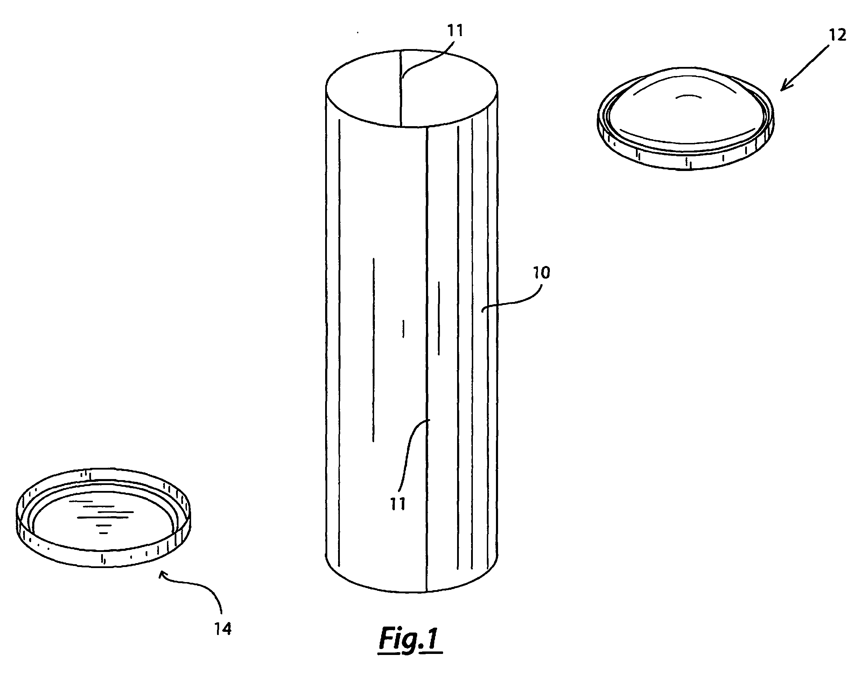

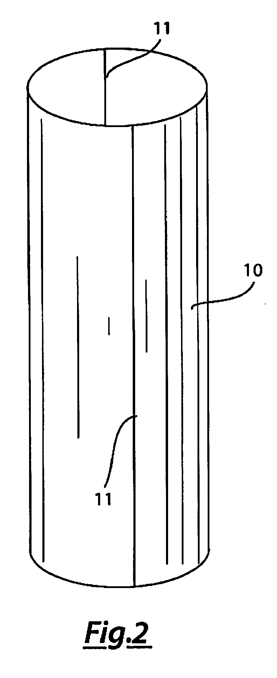

With reference to the figures cited, the protection body for plants, according to the invention, includes a plate or sheet 10, made of transparent plastic material and of adequate thickness (typically 1 or 2 mm.), which is cylindrically wrapped, as evident from figures 1 and 2, around the plant to be protected and which is fixed, at least partially, along one or both the vertically positioned sides 11, using Velcro^{®}, magnetic means or other type of quick opening fastening.

The sheet 10 can be realized according to predetermined lengths, in such a way as to it can be subsequently sized according to the growth of the plant.

At the top, the arrangement of a closing element 12 is provided, for example of the dome-type (as shown in the embodiments of the attached figures), made also of transparent plastic and/or colored material and insulated, to close from the top, like a covering, the circular structure of the sheet 10, being close to the perimetrical side thereof.

Furthermore, the closing element 12 can be made of scaling diameters, depending on the diameter of the protection body so obtained, in such a way as also the closing element 12 presents diametral fixing functions.

Finally, in illustrative and preferred embodiments, according to which the protection body is built in the above-ground version, it is possible to provide an additional lower closing element or bottom 14 (in particular, for the protection of pot plants), insulated and also made of plastic and/or transparent and/or colored material.

In such a way, the aforesaid closing element or bottom 14 may present a profile in the spape of a tank 13 for collecting water and can serve as lower support seat of the pot, as well as has itself functions of diametral fixing of the transparent sheet 10, through the circular seat 15.

In further illustrative and not limiting embodiments, the sheet 10 may present one or more aeration holes, as well as the upper closing element 12 may have at least one hole to allow the sprinkle of the plant and/or additional lighting and/or heating systems (lamps, fans, radiant heating and/or air conditioning elements, etc.).

Compared to the known equivalent art, the advantages achieved by the self-supporting body for the conservation and the cultivation of plant species, according to the present invention, are, therefore, unequivocal and relevant, being realized by:
- simplicity and quickness of assembly and disassembly of the body;
- cheapness of construction;
- small dimensions of the body, even when the same is not in use (since the sheet 10 may be wrapped at minimum diameter);
- possibility to change at will the diameter of the body as the overall dimensions of the plant grow;
- possibility to use the body both for pot plants and for ground plants;
- excellent winter protection for the plant species;
- possibility to easily aerate the plant;
- pleasant aesthetic.

In particular, the transparency of the materials and the various colors, which can be made for the finishings, gives to the plants placed inside the body object of the invention the appearance of a "wrapped up flower", giving to the whole a particularly pleasant aesthetic.

From the description made it is understood, therefore, as the self-supporting body for the conservation and the cultivation of plant species, according to the invention, reaches the purposes and achieves the advantages mentioned above.

In terms of execution, changes may be made to the body according to the invention consisting, for example, in a different constructive composition of the bearing frame.

Beyond this, the materials of the elements forming the body according to the invention can be selected at will among those ones technically favorable.

It is, finally, clear that several other changes could be made to the self-supporting body in question, without for this reason going out of the novelty principles inherent to the inventive idea, as it is clear that, in the practical implementation of the invention, materials, shapes and sizes of the illustrated details could be any, depending on the needs, and replaced with others technically equivalent.

## Claims

1. Self-supporting body for the conservation and the cultivation of plant species, which can be used, in particular, for the protection of pot or ground plants, **characterized in that** it comprises at least one plate or sheet (10), made of transparent plastic material, of predetermined thickness, which is wrapped around the plant and fixed, at least partially and removably, in correspondence of at least one vertical side (11) of the structure, through quick opening fastening means.

2. Self-supporting body as claim 1, **characterized in that** at least one first closing element (12), made of transparent and/or plastic and/or colored material, having also functions of diametral fixing of the sheet (10), is positioned at the top of said sheet (10).

3. Self-supporting body as claim 1, **characterized in that** at least one second closing element (14), made of plastic and/or transparent and/or colored material, having also functions of diametral fixing of the sheet (10), is positioned at the bottom of the lower part of the body.

4. Self-supporting body as claim 3, **characterized in that** said second closing element (14) presents a profile in the shape of a tank (13) for collecting water and can be used as lower support of at least one container or pot, in case the protection body is used for the protection of pot plants.

5. Self-supporting body as claim 1, **characterized in that** said sheet (10) is produced according to predetermined lengths, so that it can be subsequently sized according to the growth of the plant.

6. Self-supporting body as claim 2, **characterized in that** said first closing element (12) is made of scaling diameters, depending on the diameter of the protection structure.

7. Self-supporting body as claim 1, **characterized in that** said sheet (10) may have at least one aeration hole in order to easily ventilate the plant.

8. Self-supporting body as claim 2, **characterized in that** said first closing element (12) may have at least one hole in order to allow the sprinkle of the plant.

9. Self-supporting body as claim 2, **characterized in that** said first closing element (12) may present lighting and/or heating systems, such as lamps, fans, radiant heating and/or air conditioning elements.

10. Self-supporting body as claim 4, **characterized in that** said second closing element (14) presents functions of diametral fixing of the transparent sheet (10) through a circular seat (15), made outside the profile in the shape of a tank (13).
